# EUROPÄISCHE PATENTSCHRIFT

(11) **EP 2 077 933 B1**
(45) Veröffentlichungstag und Bekanntmachung des Hinweises auf die Patenterteilung: **01.02.2012**
(21) Anmeldenummer: 07820642.2
(22) Anmeldetag: 27.09.2007
(51) Int. Cl.: B28C 7/00, C04B 40/06

(54) **VERFAHREN UND VORRICHTUNG ZUR HERSTELLUNG VON GEKÜHLTEM FRISCHBETON**
METHOD AND DEVICE FOR THE PRODUCTION OF CHILLED FRESH CONCRETE
PROCÉDÉ ET DISPOSITIF DE FABRICATION DE BÉTON FRAIS REFROIDI

(30) Priorität: 04.10.2006 DE 102006047261; 22.02.2007 DE 102007008811
(43) Veröffentlichungstag der Anmeldung: 15.07.2009
(73) Patentinhaber: Messer Group GmbH, 65843 Sulzbach (DE)
(72) Erfinder: TAUCHMANN, Jens, 47259 Duisburg (DE); HATZ, Gottfried, 8461 Ehrenhausen (AT); DIETRICH, Oliver, 47800 Krefeld (DE)
(74) Vertreter: Münzel, Joachim R.
(86) Internationale Anmeldenummer: PCT/EP2007/060251
(87) Internationale Veröffentlichungsnummer: WO 2008/040674

(56) Entgegenhaltungen:
- EP-A- 0 272 880
- EP-A1- 0 436 140
- EP-A1- 0 436 140
- WO-A-03/004234
- WO-A1-03/004954
- WO-A1-03/004954
- JP-A- 1 026 408
- JP-A- 1 317 707
- JP-A- 1 317 707
- US-A- 4 304 286
- US-A- 4 304 286

## Beschreibung

Die Erfindung betrifft ein Verfahren zur Herstellung von gekühltem Frischbeton, bei dem wenigstens ein Zugabestoff in einem Vorratssilo gespeichert und aus dem Vorratssilo zu einer Mischeinrichtung transportiert wird, in der der Zugabestoff mit einem oder mehreren weiteren Zugabestoffen sowie mit Wasser zur Herstellung des Frischbetons zusammengeführt wird.

Derartige Verfahren sind bekannt. Bei der Herstellung von Frischbeton ist es jedoch häufig erforderlich, den Frischbeton selbst oder einen der Ausgangsstoffe für die Herstellung zu kühlen.

Aus der WO 02/36523 A1 ist dazu ein Verfahren bekannt, bei dem das zur Herstellung des Frischbetons benötigte Wasser zumindest teilweise in Form von unterkühlten Schneekristallen zugeführt wird. Diese technische Lehre ist älteren Verfahren überlegen, bei denen das Wasser in Form von Scherbeneis zugeführt wurde, was regelmäßig zu Wassereinschlüssen im Beton führte. Dennoch besteht bei all diesen Verfahren die Gefahr einer inhomogenen Temperaturverteilung im fertigen Gemisch.

Ein ähnliches Verfahren ist aus der WO 03 004234 A1 bekannt. Auch hier wird das dem Beton zuzuführende Wasser mittels eines kryogenen Kältemittels zu Schnee gefroren und dabei auf eine Temperatur von unter minus 40°C abgekühlt. Um eine Verklumpung der Schneekristalle und eine dadurch drohende Bildung von Wassereinschlüssen im Beton zu vermeiden werden die Schneekristalle vor ihrer Vermischung mit den übrigen Zuschlagstoffen einem Verfahren zur Vereinzlung unterzogen. Jedoch ist auch bei diesem Gegenstand die Gefahr einer inhomogenen Temperaturverteilung im fertigen Gemisch nicht gebannt.

Eine alternative Vorgehensweise sieht daher vor, gekühlte Zugabestoffe zu verwenden. Ein solches Verfahren ist beispielsweise aus der DE 36 23 726 A1 bekannt. Beim Gegenstand dieser Druckschrift wird zugleich mit der Zuführung des Zements in ein Vorratssilo über eine separate Zuleitung flüssiger Stickstoff in das Zementsilo eingesprüht. Beim Kontakt mit dem Zement verdampft der Stickstoff und wird als Gas mit dem Abluftstrom ausgetragen. Mit diesem Verfahren kann jedoch eine ausreichende Kühlung des Zements nicht erzielt werden, da bei der getrennten Zuführung von Zement und Stickstoff ein nur unzureichender Wärmekontakt zwischen beiden Stoffen hergestellt wird. Ein großer Teil des eingesetzten Stickstoffs entweicht damit ungenutzt, und das kalte Stickstoffabgas kann leicht eine Vereisung eines dem Silo zugeordneten Entstaubungsfilters bewirken.

Aus der US 4 479 362 ist ein Verfahren zur Kühlung von Zement bekannt, bei dem Zement pneumatisch über eine Förderleitung in das Vorratssilo eingespeist und Flüssigstickstoff über einen in der Zementleitung angeordneten Stutzen eingeleitet wird. Nachteilig bei diesem Verfahren ist, dass auch hier kein homogener Wärmeaustausch zwischen Zement und Stickstoff hergestellt und somit die Enthalpie des Stickstoffs nur unzureichend genutzt wird.

In der DE 40 10 045 A1 ist ein weiteres Verfahren zur Kühlung einer pulverförmigen Substanz, insbesondere Zement, beschrieben, bei dem die Substanz über eine Förderleitung in ein Vorratssilo gefördert wird. In der Förderleitung ist eine Venturidüse eingebaut. Der als Kältemittel eingesetzte flüssige Stickstoff wird durch ein in der Venturidüse angeordnetes Mischrohr in den Förderstrom der Substanz eingedüst. Die mit dem Stickstoff vermischte und dadurch gekühlte Substanz wird anschließend zum Silo gefördert und fällt dort in den Lagerbereich des Silos hinab, während der Stickstoff durch den dem Silo zugeordneten Entstaubungsfilter entweicht.

Die EP 0 436 140 A1 beschreibt ein Verfahren zur Herstellung von Beton, bei dem gekühlter Zement vor der Vermischung mit den übrigen Zugabestoffen in einem Zementsilo bevorratet wird. Beim Einfüllen in das Zementsilo wird der Zement aus einer ringförmig um die Zuführöffnung des Zements angeordneten Düse mit einem kryogenen Kältemittel beaufschlagt.

Generell führen solche Kühlverfahren, bei denen Zuschlagsstoffe bei der Zuführung in das Vorratssilo gekühlt werden, zu einem hohen Verbrauch an eingesetztem Kältemittel. Überdies ist eine Kühlung des gesamten gespeicherten Vorrats auch dann erforderlich, wenn nur ein geringer Teil des gespeicherten Zuschlagstoffes tatsächlich in gekühlter Form benötigt wird. Zudem kommt es infolge der starken Gasentwicklung und der damit verbundenen starken turbulenten Gasströmung dazu, dass Zement vom Stickstoffgas mitgerissen und in den Umgebungsbereich ausgetragen wird. Hierdurch geht Substanz verloren und es kommt zu einer nicht unerheblichen Belastung von Mitarbeitern und Umwelt.

Weiterhin ist es nicht ohne weiteres möglich, das Kältemittel in die Zuführleitung des Zugabestoffes zwischen Vorratssilo und Waage bzw. Mischer einzuleiten, da es beim Auftreffen des flüssigen Stickstoffs auf die Substanz zum Phasenübergang des Stickstoffs und damit zu einer starken Gasentwicklung an der Einspeisestelle kommt. Dies führt zu einer kurzzeitigen Sperrung des Förderstroms der Substanz. Durch den Stopp des Förderstroms baut sich die Gasblase in der Förderleitung ab und der Feststoffstrom wird wieder aufgenommen, um wiederum den Kontakt der Substanz mit dem Flüssigstickstoff und damit eine starke Gasentwicklung in der Förderleitung auszulösen. Dieser Vorgang wiederholt sich laufend und führt zu einem unregelmäßigen Eintrag der Substanz und damit in der Folge zu einem impulsartigen Abblasen von Stäuben, was wiederum Mitarbeiter und Umwelt erheblich belastet und darüber hinaus eine genaue Dosierung des Zuschlagstoffes erschwert.

Aus der JP 01 026408 A ist ein Verfahren zum Herstellen von gekühltem Frischbeton bekannt, bei dem einer der Zugabestoffe ein Bad aus verflüssigtem Gas durchläuft und anschließend mit den übrigen Zugabestoffen vermischt wird. Bei diesem Verfahren ist jedoch die Temperatur des zugeführten gekühlten Zugabestoffes nur schwer zu kontrollieren.

In der WO 0 272 880 A1 wird ein Verfahren zur Herstellung von Beton beschrieben, bei dem der dem Beton beigemischte Sand vor der Vermischung mit den übrigen Zugabestoffen gekühlt wird. Ziel ist dabei, die Sandkörner mit einer Schicht aus gefrorenem Eis zu überziehen. Das Eis dient dabei gleichzeitig als Wasserlieferant für das Betongemisch wie auch zur Kühlung des Frischbetons. Die Behandlung des Sandes erfolgt dabei beispielsweise durch Besprühung mit einem kryogenen Kältemittel oder durch Einsprühen eines verflüssigten Gases in eine Mischeinrichtung, etwa eine Rühreinrichtung oder eine Schnecke, in der der Sand umgewälzt wird. Das Aufsprühen des Kältemittels auf den Zugabestoff ist jedoch eine nur sehr ineffiziente Form der Kühlung; die Kontaktieren mechanischer Mischeinrichtungen mit einem kryogenen Kältemittel weist den Nachteil auf, dass es nach einer gewissen Zeit zu Vereisungen und somit zu einer Beeinträchtigung der Funktionsfähigkeit der Mischeinrichtung kommen kann.

Eine gleichfalls mechanische und aus dem zuvor genannten Grunde problematische Kühlvorrichtung wird in der der JP 1317707 A beschrieben. Hier erfolgt eine Kühlung von Zement in einer Mischeinrichtung auf mechanischem Wege mittels rotierender Mischblätter.

Die WO 03 004954 A1 beschreibt ein Verfahren zur direkten Kühlung von feinteiligen Feststoffen vor der Abfüllung in Schüttgutverpackungen. Da derartige Schüttgüter produktionsbedingt häufig Temperaturen aufweisen, die für eine problemlose Abfüllung zu hoch sind, werden sie vor der Abfüllung durch Mischung mit einem kryogenen Kältemittel, beispielsweise flüssigen Stickstoff, gekühlt. Die Kühlung erfolgt beispielsweise durch Eindosierung des flüssigen Stickstoffs in eine den zu kühlenden Stoff leitende Förderleitung. Die Herstellung von Frischbeton wird in dieser Druckschrift jedoch nicht thematisiert.

Eine andere Möglichkeit zur Kühlung pulverförmiger Feststoffe ist aus der US 4303286 A in Form eines Verfahrens zur Herstellung von Spritzgussformen bekannt. Um den für die Herstellung der Formen eingesetzten Sand zu trocknen und zu kühlen, wird dieser vor der Herstellung der Formen mit durch die Beimischung von flüssigem Stickstoff gekühlter Luft in einem Wirbelbett fluidisiert. Auch dieser Gegenstand befasst sich nicht mit der Herstellung von Zement.

Aufgabe der Erfindung ist daher, ein Verfahren zum Herstellen von gekühltem Frischbeton anzugeben, das sehr effizient arbeitet und die Belastung von Mensch und Umwelt reduziert.

Diese Aufgabe ist bei einem Verfahren der eingangs genannten Art und Zweckbestimmung dadurch gelöst, dass wenigstens ein Teilstrom des dem Vorratssilo entnommenen Zugabestoffes in einer Kühleinrichtung mit einem Kältemittel in thermischen Kontakt gebracht und dabei gekühlt wird, das beim thermischen Kontakt mit dem Zugabestoff erwärmte Kältemittel vom gekühlten Zugabestoff getrennt wird und anschließend der Zugabestoff der Mischeinrichtung zugeführt wird, wobei die Kühlung des Teilstroms in einem Wirbelbettreaktor erfolgt und als Kältemittel ein kryogenes Kältemittel, beispielsweise Stickstoff oder Kohlendioxid zum Einsatz kommt, das mit dem Teilstrom des zu kühlenden Zugabestoffs in der Kühleinrichtung innig durchmischt wird, wobei verdampftes Kältemittel im Bereich der Kühleinrichtung vom Zugabestoff getrennt wird.

Erfindungsgemäß wird also zumindest ein Teilstrom des jeweiligen Zugabestoffes, der aus seinem Vorratsbehälter zur Mischeinrichtung gefördert wird, entnommen und auf eine tiefe Temperatur gekühlt. Als "Zugabestoff" wird hier ein fester, jedoch schütt- oder rieselfähiger Zugabestoff verstanden, also beispielsweise Zement, Sand, Trass, Mineralfasern oder Kies. Da der Zugabestoff in der Mischeinrichtung auf eine fast beliebig tiefe und nur durch die Temperatur des Kältemittels begrenzte Temperatur gekühlt werden kann, genügt es häufig, bereits einen geringen Teilstrom zu kühlen, um ein effizientes Kühlergebnis zu bewirken. Der gekühlte Zugabestoff wird vom Kältemittel getrennt und anschließend entweder dem ungekühlten Teilstrom des gleichen Zugabestoffs zugeführt oder unmittelbar, ggf. nach einer Wägung, der Mischeinrichtung zugeführt, in der der Frischbeton hergestellt wird. Die Kühlung erfolgt somit erst unmittelbar vor der Zubereitung des Frischbetons und nicht bereits bei der Bereitstellung eines Vorrats in einem Vorratssilo. Die Kühlung des Zugabestoffes kann dabei auch indirekt, also beispielsweise in einem Wärmetauscher erfolgen; eine bessere Wärmeübertragung erfolgt jedoch in der Regel durch direkten Kontakt des Zugabestoffes mit dem Kältemittel. Durch das erfindungsgemäße Verfahren gelingt eine genaue Dosierung und Temperierung des betreffenden Zugabestoffes. Durch erst unmittelbar vor dem Mischprozess stattfindende Kühlung kann sehr flexibel auf die jeweiligen Erfordernisse reagiert und die Kühlung entsprechend angepasst werden.

Vorteilhafterweise kommt als Kältemittel ein kryogenes Kältemittel, beispielsweise flüssiger oder kalter gasförmiger Stickstoff oder Kohlendioxid zum Einsatz, das mit dem Teilstrom des Zugabestoffes innig durchmischt wird, um einen maximalen Wärmeübertrag vom Zugabestoff auf das Kältemittel zu gewährleisten. Bei der Durchmischung kommt es lediglich zu einem Wärmeübergang zwischen dem Kältemittel und dem schütt- oder rieselfähigen Zugabestoff, nicht aber zu einer Verbindung zwischen beiden Stoffen; sofern das Kältemittel in flüssigem Zustand zugeführt wird, verdampft es durch den Kontakt mit dem Zugabestoff. Das gasförmige Kältemittel wird noch im Bereich der Kühleinrichtung physikalisch vom Zugabestoff getrennt und abgeführt. Es kommt damit nicht mehr zu dem aus dem Stand der Technik bekannten, impulssartigen Abblasverhalten beim Weitertransport des Zugabestoffes. Die Wahl des kryogenen Kältemittels hängt dabei von den jeweiligen Umständen ab: Stickstoff ermöglicht die Kühlung des Zugabestoffes auf Temperaturen von bis zu minus 193°C. Kohlendioxid ermöglicht lediglich eine Abkühlung auf ca. minus 78,5°C, hat jedoch gegenüber Stickstoff den Vorteil einer etwa doppelt so großen Sublimationsenhalpie. Bei der Zuführung von Kohlendioxid im flüssigen Zustand kann zudem auf aufwändige wärmeisolierte Zuleitungen verzichtet werden. Verflüssigtes Kohlendioxid besitzt eine kritische Temperatur von 31 °C und einen kritischen Druck von 7,4 MPa, und kühlt sich bei seiner Entspannung infolge des Joule - Thomson - Effektes unter Bildung von kaltem Kohlendioxidgas und Kohlendioxidschnee stark ab. Es kann daher in einer Druckleitung bei Umgebungstemperatur herangeführt werden. Gasförmiges Kohlendioxid als Kühlmedium für Zement sollte vorzugsweise eine Temperatur von -78°C bis 5°C, bevorzugt von -78 bis -25°C, aufweisen.

In einer abermals vorteilhaften Weiterbildung der Erfindung wird die Temperatur des Endprodukts dadurch beeinflusst, dass entweder der im Teilstrom enthaltene Mengenanteil des zu kühlenden Zugabestoffes, die pro Menge des Zugabestoffes eingesetzten Kältemittelmenge und/oder die Zeitdauer, innerhalb der der zu kühlende Zugabestoff mit dem Kältemittel in Kontakt ist, variiert wird. Die Temperatur des Endprodukts kann dabei auch als Regelgröße verwendet werden, auf die einer oder mehrere der genannten Parameter eingestellt wird.

Bei der Erfindung erfolgt die Kühlung in einem Wirbelbett- bzw. Wirbelschichtreaktor, der in der Zuführleitung zwischen Vorratsbehälter und Mischeinrichtung integriert ist. Als Wirbelbettreaktor wird hier ein Reaktortyp verstanden, bei dem der Zugabestoff (Wirbelgut) durch das einströmende gasförmige oder verdampfende Kühlmittel (Wirbelmedium) verwirbelt und innig mit diesem durchmischt wird, wobei es zu einer guten Wärmeübertragung zwischen beiden Medien kommt. Durch den engen Kontakt des Wirbelgutes mit dem Wirbelmedium und den lebhaften Platzwechseln der einzelnen Partikel nach allen Richtungen kommt es zu einer außerordentlich guten Wärmeübertragung innerhalb der Wirbelschicht. Das erwärmte Kältemittel wird anschließend aus dem Wirbelbettreaktor abgezogen und behindert den weiteren Transport des Zugabestoffes nicht mehr. Es kommt somit nicht mehr zu dem aus dem Stand der Technik bekannten, impulsartigen Abblasverhalten.

Um den Kontakt des Zugabestoffes mit feuchter Außenluft zuverlässig zu vermeiden, ist es zweckmäßig, beim Eindüsen des Kältemittels in den Wirbelbettreaktor einen Überdruck zu erzeugen.

Die Aufgabe der Erfindung wird auch durch eine Vorrichtung zum Herstellen von gekühltem Frischbeton mit den Merkmalen des Patentanspruchs 4 gelöst.

Die erfindungsgemäße Vorrichtung ist also mit wenigstens einem Vorratsbehälter für einen Zugabestoff ausgestattet, wobei der Vorratsbehälter über wenigstens zwei Zuführleitungen mit einer Mischeinrichtung strömungsverbunden ist. In einer der Zuführleitungen ist eine Kühleinrichtung integriert, die mit einer Zuführung für ein kryogenes Kältemittel und mit einer Abgasleitung für erwärmtes Kältemittel strömungsverbunden ist. Bei der erfindungsgemäßen Vorrichtung erfolgt also noch vor der Zuführung des Zuschlagstoffes an den Mischer zunächst die Kühlung des Zuschlagsstoffes mittels eines kryogenen Mediums und anschließend die Trennung des gekühlten Zuschlagstoffes vom erwärmten kryogenen Medium, wobei das kryogene Medium anschließend über die Abgasleitung entweicht. In die Mischeinrichtung gelangt auf diese Weise nur der gekühlte Zuschlagstoff; es kommt nicht mehr zu dem eingangs erwähnten negativen Abblasverhalten. Unter "kryogenes Medium" wird hier beispielsweise ein tiefkaltes Gas oder ein kalt verflüssigtes Gas, wie Flüssigstockstoff, verstanden, oder ein unter Druck herangeführtes und sich bei Entspannung stark abkühlendes Gas wie Kohlendioxid. Vorteilhafterweise ist der Vorratsbehälter mit der Mischeinrichtung über wenigstens zwei Zuführleitungen strömungsverbunden, wobei in einer der Zuführleitungen zwecks Kühlung eines Teilstroms eine Kühleinrichtung vorgesehen ist. Mittels einer geeigneten Wahl der über beide Zuführleitungen geführten Teilströme kann so die Temperatur des insgesamt zugeführten Zuschlagstoffs und damit des Frischbetons gezielt beeinflusst werden.

Bei der Erfindung handelt es sich bei der Kühleinrichtung um einen Wirbelbettreaktor. Als Wirbelbettreaktor wird hier ein Reaktortyp verstanden, bei dem der Zugabestoff (Wirbelgut) durch das eingetragene gasförmige oder verdampfende Kältemittel (Wirbelmedium) verwirbelt wird und es so zu ein er guten Durchmischung von Zugabestoff und dem Kältemittel kommt. Ein bevorzugter Wirbelbettreaktor umfasst eine mit der Zuführleitung für Zugabestoff strömungsverbundene Feststoffzuführung, die im Kopfbereich des Wirbelbettreaktors angeordnet ist, einen mit seitlichen oder im Bodenbereich angeordneten Düsen zum Einsprühen eines kryogenen Kältemittels ausgerüsteten Wirbelbettbereich und einen im unteren Abschnitt des Wirbelbettreaktors angeordneten Auffangbereich zum Auffangen des gekühlten Zugabestoffes. Vom Auffangbereich wird der Zugabestoff beispielsweise an die Mischeinrichtung oder eine zwischengeschaltete Waage weitergeleitet. Gasförmiges, erwärmtes Kühlmittel wird im Kopfbereich des Wirbelbettreaktors über eine Filtereinrichtung abgezogen.

In dem Fall, dass der der Zugabestoff mit Hilfe eines Fördermediums pneumatisch durch die Zuführleitung gefördert wird, dass also der Zuführleitung eine pneumatische Fördereinrichtung zugeordnet ist, ist es vorteilhaft, dass dem Wirbelbettreaktor eine Trenneinrichtung zum Trennen des Zugabestoffes vom Fördermedium vorgeschaltet ist.

Eine vorteilhafte Weiterbildung der Erfindung sieht vor, dass der Kühleinrichtung ein thermisch isolierter Vorratsbehälter zur Aufnahme des gekühlten Teilstroms nachgeschaltet ist, aus dem mittels einer Absperreinrichtung eine dosierte Menge des gekühlten Zusatzstoffes einer Waage oder einer Mischeinrichtung zuführbar ist. Der gekühlte Anteil des Zugabestoffes steht somit bei der Wägung sofort in der benötigten Menge zur Verfügung, wodurch sich der Kühlverlust minimiert.

Für die Regelung der Temperatur des Frischbetons ergeben sich im Rahmen der Erfindung verschiedene vorteilhafte Möglichkeiten. Zum einen kann die Menge des der Nebenleitung zugeführten Teilstroms und damit der Anteil des Zugabestoffes, der gekühlt wird, verändert werden. Zum zweiten kann die pro Menge des zu kühlenden Zugabestoffes eingesetzte Kältemittelmenge verändert werden. Drittens kann die Temperatur des Kältemittels verändert werden. Insbesondere beim Einsatz von Kohlendioxid als Kältemittel, das in flüssigem Zustand unter Druck herangeführt und beim Eintritt in den Wirbelschneckenkühler entspannt wird, kann die Temperatur des entspannten Kohlendioxids durch eine geeignete Wahl des Drucks und der Temperatur des zugeführten flüssigen Kohlendioxids festgelegt werden. Viertens kann die Temperatur durch die Geschwindigkeit des Wirbelschneckenkühlers beeinflusst werden. Je schneller der Transport des Zugabestoffes durch den Wirbelschneckenkühler erfolgt, desto weniger Wärme wird an das Kältemittel abgegeben und desto höher ist die Temperatur des sich ergebenden Endprodukts.

Anhand der Zeichnungen sollen Ausführungsbeispiele der Erfindung näher erläutert werden. In schematischen Anzeigen zeigt:
Fig. 1: Eine nicht zur Erfindung gehörende Vorrichtung mit einem Wirbelschneckenkühler als Kühleinrichtung,
Fig. 2: Eine erfindungsgemäße Vorrichtung in einer zweiten Ausführungsform mit einem Wirbelbettreaktor als Kühleinrichtung.

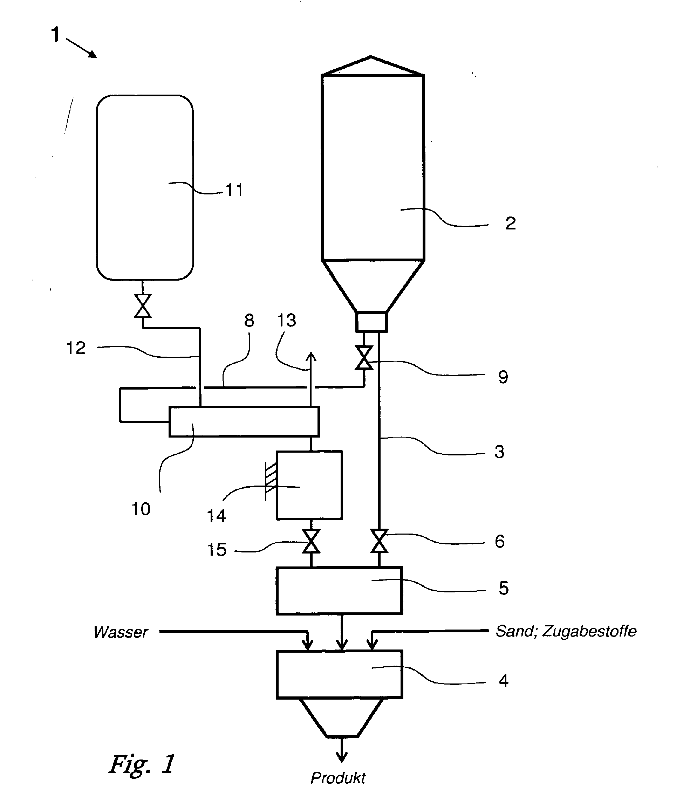

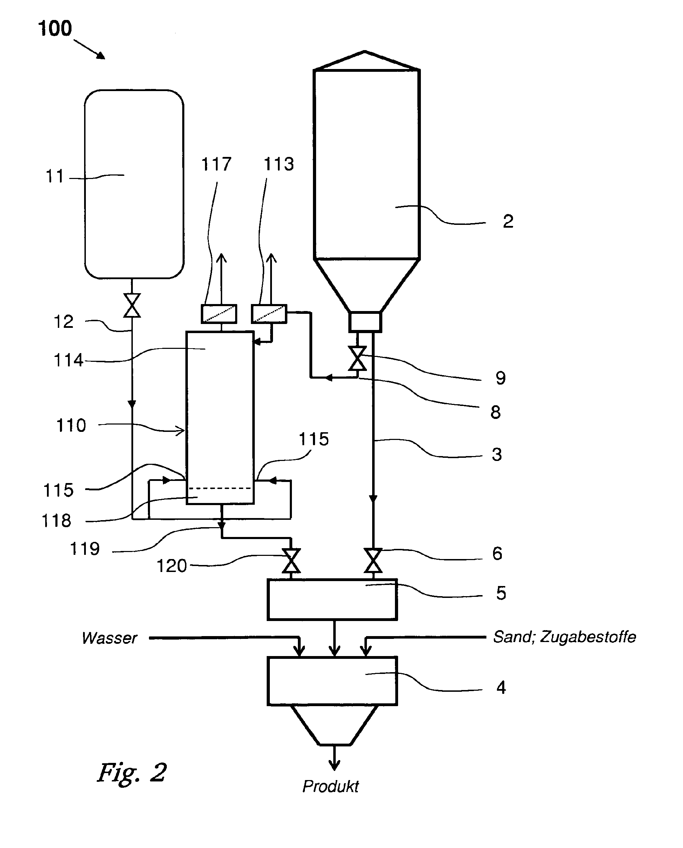

In den Zeichnungen sind gleichartige Bauteile mit gleichen Bezugsziffern versehen. Die Vorrichtungen 1 (Fig. 1) und 100 (Fig. 2) umfassen jeweils in üblicher Weise ein Vorratssilo 2 für einen Zugabestoff, im Ausführungsbeispiel für Zement. Das Vorratssilo 2 ist über eine Förderleitung 3 mit einer Waage 5 verbunden, an der sich eine Mischeinrichtung 4 anschließt, die der Anmischung des Fertigbetons dient und in die weitere Zuführungen für andere Zugabestoffe, wie Sand, Zuschlagstoffe oder Wasser einmünden. Bei der Förderleitung 3 kann es sich sowohl um eine pneumatische Förderleitung als auch um eine mechanische Fördereinrichtung, beispielsweise ein Förderband, handeln. Zur Dosierung des Zugabestoffes ist in der Förderleitung 3 in an sich bekannter Weise ein Dosierelement 6 angeordnet, bei dem es sich beispielsweise um einen Schieber oder eine Dosierschnecke handelt.

Am Ausgang des Vorratssilos 2 zweigt des Weiteren eine Nebenleitung 8 ab, die gleichfalls mit der Waage 5 verbunden ist, und in der ebenfalls ein Transport von Zement aus dem Vorratssilo 2 auf pneumatischem oder mechanischem Wege erfolgt. Mittels eines Ventils 9 wird der durch die Nebenleitung 8 geführte Stoffstrom reguliert. Durch die Betätigung des Dosierelements 6 sowie des Ventils 9 kann der Stoffstrom so ganz oder teilweise durch die Förderleitung 3 oder durch die Nebenleitung 8 geführt werden.

Der durch die Nebenleitung 8 geführte Stoffstrom wird in der Ausführungsform der Vorrichtung 1 nach Fig. 1 in der im Folgenden beschriebenen Weise gekühlt. Die Nebenleitung 8 mündet in eine Kühleinrichtung ein, bei der es sich im Ausführungsbeispiel nach Fig. 1 um einen Wirbelschneckenkühler 10 handelt. Im Wirbelschneckenkühler 10 wird der Zement innig mit einem Kältemittel durchmischt und dadurch gekühlt. Beim Kältemittel handelt es sich im Ausführungsbeispiel um flüssigen Stickstoff, der in einem Tank 11 bevorratet und über eine thermisch isolierte Kältemittelzuleitung 12 zum Wirbelschneckenkühler 10 gefördert wird. Durch die gute Durchmischung mit dem flüssigen Stickstoff im Wirbelschneckenkühler 10 kann der Zugabestoff auf Temperaturen bis hinab zu -193°C abgekühlt werden. Der beim Kühlprozess verdampfende Stickstoff wird über eine Gasableitung 13 aus dem Wirbelschneckenkühler 10 abgeführt. Im weiteren Transportverlauf des Zugabestoffes kommt es daher nicht zu Störungen aufgrund der beim Verdampfen des Kältemittels auftretenden Gasentwicklung. Anstelle von flüssigem Stickstoff kann im Übrigen auch ein anderes kryogenes Kältemittel zum Einsatz kommen, beispielsweise Kohlendioxid, das im festen, flüssigen oder kalten gasförmigen Zustand herangeführt und mit dem Zement im Wirbelschneckenkühler 10 durchmischt wird. Der gekühlte Zement wird anschließend entweder - hier nicht gezeigt - über ein geeignetes Dosierelement unmittelbar der Waage 5 zugeführt oder, wie im Ausführungsbeispiel, in einem isolierten Vorratsbehälter 14 zwischengelagert. Mittels eines am Vorratsbehälter 14 angeordneten Sperrglieds 15, beispielsweise ein Schieber, wird der im Vorratsbehälter 14 befindliche gekühlte Zement ganz oder in einer vorbestimmten Menge der Waage 5 zugeführt. Gekühlter Zement aus dem Vorratsbehälter 14 und ungekühlter Zement aus der Förderleitung 3 können dabei entweder gemeinsam oder unabhängig voneinander in der Waage 5 gewogen und anschließend in die Mischeinrichtung 4 eingemischt werden.

In der Ausführungsform der Vorrichtung 100 nach Fig. 2 mündet die Nebenleitung 8 in eine Kühleinrichtung ein, bei der es sich um einen Wirbelbettreaktor 110 handelt, in dem der Zement mit einem Kältemittel verwirbelt und dadurch gekühlt wird. Erfolgt der Transport des Zements in der Nebenleitung 8 auf pneumatischem Wege, ist dem Wirbelbettreaktor 110 eine Trenneinheit 113, beispielsweise ein Zyklon, vorgeschaltet, in der das Fördermedium, beispielsweise Luft oder ein inertes Gas, vom Zement getrennt wird. Beim Kältemittel handelt es sich auch bei diesem Ausführungsbeispiel um flüssigen Stickstoff, der in einem Tank 11 bevorratet und über eine thermisch isolierte Kältemittelzuleitung 12 zum Wirbelbettreaktor 110 gefördert wird.

Zur Kühlung wird der - gegebenenfalls in der Trenneinheit 113 vom Fördermedium getrennte - Zement aus der Förderleitung 8 im Kopfraum 114 des Wirbelbettreaktors 110 eingespeist. In einem sich unterhalb des Kopfraums 114 befindlichen Abschnitt des Wirbelbettreaktors 110 wird das Kältemittel an seitlich in der Wand des Wirbeibettreaktors 110 angeordneten Düsen 115 eingebracht. Um eine effektive Verwirbelung des Zements zu bewirken sind dabei mehrere Düsen 115 in gleichmäßigen Winkelabständen am Wirbelbettreaktor 110 angeordnet. Durch die Düsen 115 wird das Kältemittel gasförmig oder im flüssigen Zustand mit hohem Druck in den Wirbelbettreaktor 110 eingedüst. Sofern das Kältemittel im flüssigen Zustand eingetragen wurde, verdampft es unter starker Gasentwicklung. Das Kältemittel trifft auf den von oben herabfallenden Zement. Bei der Verwirbelung des Zements erfolgt eine innige Durchmischung von Zement und Kältemittel, durch die aufsteigende Gasströmung wird die Fallgeschwindigkeit des Zements gebremst und damit die Zeitdauer, in der der Zement der Kältemittelatmosphäre ausgesetzt ist, verlängert. Insgesamt ergibt sich damit eine sehr effektive Wärmeübertragung. Durch das mit hohem Druck eingetragene Kältemittel besteht während der Reaktion im Wirbelbettreaktor 110 ein Überdruck, der das Eindringen von feuchter Außenluft zuverlässig unterbindet. Das durch den Kontakt mit dem Zement erwärmte Kältemittel steigt in den Kopfraum 114 des Wirbelbettreaktors 110, wo es über eine Filtereinheit 117 und eine sich daran anschließende Gasableitung abströmt. Im weiteren Transportverlauf des Zements kommt es daher nicht zu Störungen aufgrund der beim Verdampfen des Kältemittels auftretenden Gasentwicklung. Durch die gute Durchmischung im Wirbelbettreaktor 110 mit flüssigen Stickstoff als Kältemittel kann der Zugabestoff auf Temperaturen bis hinab zu -193°C abgekühlt werden. Anstelle von flüssigem Stickstoff kann im Übrigen auch ein anderes kryogenes Kältemittel zum Einsatz kommen, beispielsweise Kohlendioxid, das im kalten gasförmigen Zustand in den Wirbelbettreaktor 110 eingedüst wird, oder das flüssig herangeführt wird und beim Eintritt in den Wirbelbettreaktor unter Bildung von Kohlendioxidgas und Kohlendioxidschnee entspannt.

Der gekühlte Zement sinkt schließlich in eine Lagerzone 118 des Wirbelbettreaktors 110, in dem der gekühlte Zement für zumindest eine kurze Zeitdauer bevorratet werden kann, und wird anschließend über eine Förderleitung 119, in der geeignetes Dosierelement 120 angeordnet ist, der Waage 5 zugeführt. Gekühlter Zement aus dem Wirbelbettreaktor 110 und ungekühlter Zement aus der Förderleitung 3 können dabei entweder gemeinsam oder unabhängig voneinander in der Waage 5 gewogen und anschließend in die Mischeinrichtung 4 eingemischt werden.

Durch die Einstellung des Mengenverhältnisses zwischen in der Einrichtung 10, 110 gekühltem Zement einerseits und durch die Leitung 3 geführten ungekühltem Zement andererseits kann die Temperatur des hergestellten Frischbetons den jeweiligen Erfordernissen bzw. Kundenwünschen angepasst werden. Insbesondere ist es möglich, auch kleinere Chargen von Frischbeton, die nur einen Teil des im Vorratsilo 2 gespeicherten Zements benötigen, mit der gewünschten Temperatur herzustellen. Weiterhin ist es möglich, während des Mischvorgangs in der Mischeinrichtung 4 die Temperatur des Frischbetons durch die Variation der Zufuhr an gekühltem bzw. ungekühltem Zuschlagstoff zu regeln. Hierfür kann auch eine - hier nicht gezeigte - automatisierte Regeleinrichtung vorgesehen sein. Die erfindungsgemäße Vorrichtungen 1, 100 sorgen für eine effektive Kühlung bei der Herstellung des Frischbetons und mindert die Belastungen für Mensch und Umwelt bei der Betonherstellung.

### Bezugszeichenliste

- 1.: Vorrichtung
- 2.: Vorratssilo
- 3.: Förderleitung
- 4.: Mischeinrichtung
- 5.: Waage
- 6.: Dosierelement
- 7.: -
- 8.: Nebenleitung
- 9.: Ventil
- 10.: Wirbelschneckenkühler
- 11.: Tank
- 12.: Kältemittelzuleitung
- 13.: Gasableitung
- 14.: Vorratsbehälter
- 15.: Sperrglied

- 100.: Vorrichtung
- 110.: Wirbelbettreaktor
- 111.: -
- 112.: -
- 113.: Trenneinheit
- 114.: Kopfraum
- 115.: Düsen
- 116.: -
- 117.: Filtereinheit
- 118.: Lagerbereich
- 119.: Förderleitung
- 120.: Sperrglied

## Patentansprüche

1. Verfahren zur Herstellung von gekühltem Frischbeton, bei dem wenigstens ein Zugabestoff in einem Vorratssilo (2) gespeichert und aus dem Vorratssilo (2) zu einer Mischeinrichtung (4) transportiert wird, in der der Zugabestoff mit einem oder mehreren weiteren Zugabestoffen sowie mit Wasser zur Herstellung des Frischbetons zusammengeführt wird,
**dadurch gekennzeichnet,**
**dass** wenigstens ein Teilstrom des dem Vorratssilo (2) entnommenen Zugabestoffs in einer Kühleinrichtung (10, 110) mit einem kryogenen Kältemittel in thermischen Kontakt gebracht und dabei gekühlt wird, anschließend das beim thermischen Kontakt mit dem Zugabestoff erwärmte Kältemittel vom gekühlten Zugabestoff getrennt wird und anschließend der Zugabestoff der Mischeinrichtung (4) zugeführt wird, wobei die Kühlung des Teilstroms in einem Wirbelbettreaktor (110) erfolgt.

2. Verfahren nach Anspruch 1, **dadurch gekennzeichnet, dass** als Kältemittel ein kryogenes Kältemittel, beispielsweise Stickstoff oder Kohlendioxid zum Einsatz kommt, das mit dem Teilstrom des zu kühlenden Zugabestoffs in der Kühleinrichtung (10,110) innig durchmischt wird, wobei verdampftes Kältemittel im Bereich der Kühleinrichtung (10,110) vom Zugabestoff getrennt wird.

3. Verfahren nach einem der vorhergehenden Ansprüche, **dadurch gekennzeichnet, dass** die Temperatur des erzeugten Frischbetons durch die Variation der im Teilstrom des zu kühlenden Zugabestoffs enthaltenen Menge und/oder der pro Menge des Zugabestoffs eingesetzten Kältemittelmenge und/oder der Zeitdauer, innerhalb der der zu kühlende Zugabestoff mit dem Kältemittel in Kontakt ist, geregelt wird.

4. Verfahren nach einem der vorhergehenden Ansprüche, **dadurch gekennzeichnet, dass** zwecks Inertisierung im Wirbelbettreaktor (110) durch das zugeführte Kältemittel ein Überdruck erzeugt wird.

5. Vorrichtung zum Herstellen von gekühltem Frischbeton, mit wenigstens einem Vorratsbehälter (2) für einen Zugabestoff, der über wenigstens zwei Zuführleitungen (3,8,119) mit einer Mischeinrichtung (4) strömungsverbunden ist, wobei in einer der Zuführleitungen (8,119) eine Kühleinrichtung (10,110) integriert ist, die mit einer Zuführung für ein kryogenes Kältemittel und mit einer Abgasleitung (13) für erwärmtes Kältemittel strömungsverbunden ist, wobei als Kühleinrichtung (10, 110) ein Wirbelbettreaktor (110) vorgesehen ist

6. Vorrichtung nach Anspruch 4, **dadurch gekennzeichnet, dass** der Wirbelbettreaktor (110) eine in seinem Kopfbereich (114) angeordnete, mit der Zuführleitung (8) für Zugabestoff strömungsverbundene Feststoffzuführung, einen mit Düsen (115) zum Einsprühen eines kryogenen Kältemittels ausgerüsteten Wirbelbettbereich und einen im unteren Abschnitt des Wirbelbettreaktors (110) angeordneten Auffangbereich (118) zum Auffangen des gekühlten Zugabestoffs aufweist.

7. Vorrichtung nach Anspruch 4 oder 5, **dadurch gekennzeichnet, dass** der Zuführleitung (8) eine pneumatische Fördereinrichtung zugeordnet ist, bei der der Zugabestoff mit Hilfe eines Fördermediums durch die Zuleitung gefördert wird, und dem Wirbelbettreaktor (10) eine Trenneinrichtung (13) zum Trennen des Zugabestoffs vom Fördermedium vorgeschaltet ist.

8. Vorrichtung nach einem der Ansprüche 4 bis 6, **dadurch gekennzeichnet, dass** der Kühleinrichtung (10,110) ein thermisch isolierter Vorratsbehälter (14) nachgeschaltet ist, aus dem mittels einer Absperreinrichtung (15) eine dosierte Menge des gekühlten Zugabestoffs der Mischeinrichtung (4) zuführbar ist.

9. Vorrichtung nach einem der Ansprüche 4 bis 7, **dadurch gekennzeichnet, dass** eine Regeleinheit die durch die Zuführleitungen (3,8, 119) geförderten Stoffmengenanteile, die Aufenthaltsdauer des zu kühlenden Zugabestoffs in der Kühleinrichtung (10, 110) und/oder die Temperatur des eingesetzten Kältemediums regelt.

## Claims

1. Method for producing cooled fresh concrete, in which method at least one additive is stored in a storage silo (2) and is transported from the storage silo (2) to a mixing device (4), in which the additive is brought together with one or more further additives and also with water to produce the fresh concrete,
**characterized**
**in that** at least a subflow of the additive taken from the storage silo (2) is brought into thermal contact with a cryogenic refrigerant in a cooling device (10, 110) and thereby cooled, then the refrigerant which is heated upon thermal contact with the additive is separated from the cooled additive and then the additive is supplied to the mixing device (4), wherein the subflow is cooled in a fluidized bed reactor (110).

2. Method according to Claim 1, **characterized in that** the refrigerant used is a cryogenic refrigerant, for example nitrogen or carbon dioxide, which is intimately mixed with the subflow of the additive to be cooled in the cooling device (10, 110), wherein evaporated refrigerant is separated from the additive in the region of the cooling device (10, 110).

3. Method according to either of the preceding claims, **characterized in that** the temperature of the fresh concrete which is produced is controlled by varying the quantity present in the subflow of the additive to be cooled and/or the quantity of refrigerant used per quantity of the additive and/or the time for which the additive to be cooled is in contact with the refrigerant.

4. Method according to one of the preceding claims, **characterized in that** an excess pressure is generated for inerting purposes in the fluidized bed reactor (110) by the supplied refrigerant.

5. Apparatus for producing cooled fresh concrete, comprising at least one storage container (2) for an additive, which is connected in terms of flow via at least two supply lines (3, 8, 119) to a mixing device (4), wherein a cooling device (10, 110) is integrated in one of the supply lines (8, 119) and is connected in terms of flow to a feed line for a cryogenic refrigerant and to an exhaust line (13) for heated refrigerant, wherein a fluidized bed reactor (110) is provided as the cooling device (10, 110).

6. Apparatus according to Claim 5, **characterized in that** the fluidized bed reactor (110) has a feed line for solids, which is arranged in the head region (114) thereof and is connected in terms of flow to the supply line (8) for additive, a fluidized bed region which is equipped with nozzles (115) for the injection of a cryogenic refrigerant, and a collection region (118), which is arranged in the lower portion of the fluidized bed reactor (110) and is intended for the collection of the cooled additive.

7. Apparatus according to Claim 5 or 6, **characterized in that** the supply line (8) has an associated pneumatic conveying device, in which the additive is conveyed through the supply line with the aid of a conveying medium, and a separation device (13) for separating the additive from the conveying medium is connected upstream of the fluidized bed reactor (10).

8. Apparatus according to one of Claims 5 to 7, **characterized in that** a thermally insulated storage container (14) is connected downstream of the cooling device (10, 110), from which container a metered quantity of the cooled additive can be supplied to the mixing device (4) by means of a shut-off device (15).

9. Apparatus according to one of Claims 5 to 8, **characterized in that** a control unit controls the quantitative proportions conveyed through the supply lines (3, 8, 119), the time for which the additive to be cooled stays in the cooling device (10, 110) and/or the temperature of the refrigerant used.

## Revendications

1. Procédé de préparation de béton frais refroidi dans lequel au moins un additif est conservé dans un silo de réserve (2) et est transporté du silo de réserve (2) à un dispositif de mélange (4) dans lequel l'additif est réuni avec un ou plusieurs autres additifs ainsi qu'avec de l'eau en vue de préparer le béton frais,
**caractérisé en ce que**
au moins un écoulement partiel de l'additif prélevé dans le silo de réserve (2) est amené en contact thermique avec un fluide frigorifique cryogène dans un dispositif de refroidissement (10, 110) pour y être refroidi,
**en ce que** le fluide frigorifique chauffé lors du contact thermique avec l'additif est ensuite séparé de l'additif refroidi,
**en ce que** l'additif est ensuite amené au dispositif de mélange (4) et
**en ce que** le refroidissement de l'écoulement partiel s'effectue dans un réacteur (110) à lit fluidisé.

2. Procédé selon la revendication 1, **caractérisé en ce qu'**il utilise comme fluide de refroidissement un fluide de refroidissement cryogène, par exemple l'azote ou le dioxyde de carbone, qui est mélangé intimement avec l'écoulement partiel de l'additif à refroidir dans le dispositif de refroidissement (10, 110), le fluide de refroidissement évaporé étant séparé de l'additif au niveau du dispositif de refroidissement (10, 110).

3. Procédé selon l'une des revendications précédentes, **caractérisé en ce que** la température du béton frais produit est régulée par l'intermédiaire de la variation de la proportion d'additif à refroidir, de la quantité de fluide frigorifique utilisé par unité de quantité d'additif et/ou de la durée au cours de laquelle l'additif à refroidir est en contact avec le fluide frigorifique.

4. Procédé selon l'une des revendications précédentes, **caractérisé en ce que** dans un but d'inertisation, une surpression est formée par le fluide frigorifique apporté dans le réacteur (110) à lit fluidisé.

5. Dispositif de préparation de béton frais refroidi, présentant au moins un récipient de réserve (2) pour un additif, relié à écoulement avec un dispositif de mélange (4) par au moins deux conduits d'amenée (3, 8, 119), un dispositif de refroidissement (10, 110) étant intégré dans l'un des conduits d'amenée (8, 119) et étant relié à écoulement à une amenée de fluide frigorifique cryogène et à un conduit (13) d'évacuation du gaz de fluide frigorifique réchauffé, un réacteur (110) à lit fluidisé étant prévu comme dispositif de refroidissement (10, 110).

6. Dispositif selon la revendication 5, **caractérisé en ce que** le réacteur (110) à lit fluidisé présente au niveau de sa tête (114) une amenée de solide reliée à écoulement au conduit d'amenée (8) d'additif, une zone de lit fluidisé équipée de tuyères (115) permettant d'injecter un fluide frigorifique cryogène et une zone de reprise (118) disposée dans la partie inférieure du réacteur (110) à lit fluidisé pour reprendre l'additif refroidi.

7. Dispositif selon les revendications 5 ou 6, **caractérisé en ce qu'**un dispositif de transport pneumatique par lequel l'additif est refoulé dans l'amenée à l'aide d'un fluide de transport est associé au conduit d'amenée (8) et **en ce qu'**un dispositif de séparation (13) qui sépare l'additif du fluide de transport est prévu en amont du réacteur (10) à lit fluidisé.

8. Dispositif selon l'une des revendications 5 à 7, **caractérisé en ce que** le dispositif de refroidissement (10, 110) est suivi par un récipient de réserve (14) isolé thermiquement et duquel un débit dosé d'additif refroidi peut être amené au dispositif de mélange (4) au moyen d'un dispositif de fermeture (15).

9. Dispositif selon l'une des revendications 5 à 8, **caractérisé en ce qu'**une unité de régulation régule les quantités transportes par les conduits d'amenée (3, 8, 119), la durée de séjour de l'additif à refroidir dans le dispositif de refroidissement (10, 110) et/ou la température du fluide frigorifique utilisé.
